# EUROPEAN PATENT APPLICATION

(11) **EP 4 803 377 A2**
(43) Date of publication of application: **09.09.2026**
(21) Application number: 26180474.4
(22) Date of filing: 05.03.2025
(51) Int. Cl.: B60R 9/06, B60R 9/10

(54) **REAR LOAD CARRIER, IN PARTICULAR A BIKE CARRIER**

(30) Priority: 26.02.2025 CN 202510225201
(62) Document number(s) of the earlier application(s) in accordance with Art. 76 EPC: 25161730.4 / 4 799 868
(71) Applicant: Carman Enterprise Co., Ltd, Hangzhou 311121 (CN)
(72) Inventor: Shuoyang, Li, Hangzhou, 311121 (CN)
(74) Representative: Paul & Albrecht Patentanwälte PartG mbB

(57) **Abstract**

Rear load carrier (1), in particular a bike carrier, with
a basic structure (2) having a base frame (3) and a coupling device (6) for attachment to a vehicle (53), wherein the coupling device (6) is arranged at a front end of the base frame (3),
a load receiving structure (7), which is held slidingly at the basic structure (2) such that it can be moved translationally between a retracted front position and an extended rear position,
wherein the load receiving structure (7) comprises a central base element (8), at least one, in particular exactly one first support part (17) and at least one, in particular exactly one second support part (18), wherein the first support part(s) (17) and the second support part(s) (18) are held pivotably at opposite lateral sides at the central base element (8) such that they can be pivoted between a load bearing position, in which they extend at least substantially horizontally, and a transport position, in which they extend at least substantially vertically.

## Description

The present invention relates to a rear load carrier, in particular a bike carrier.

Load carriers for fastening to the rear end of a vehicle, in particular a motor vehicle such as a car, are often used for transporting bicycles and/or additional luggage exceeding the capacity of the luggage compartment of the car. Generally, this type of load carrier comprises a coupling device at its front end, which is normally designed so that the load carrier can be fastened to the ball of a conventional trailer coupling. Furthermore, such load carriers for transporting bicycles comprise a carrier frame to which profile rails for receiving the wheels of bicycles are fastened. These profile rails are normally arranged transversally to the direction of travel and substantially horizontally, and comprise fixing means for fixing the bicycles to the profile rail. Other load carriers exist such as luggage carriers, wherein the carrier frame carries a luggage box, in which luggage, for example suitcases, can be stored.

Such load carriers have proven themselves in principle. However, it is sometimes considered as disadvantageous that, when such a load carrier is mounted to a vehicle, it is difficult to get access to a luggage compartment. In other words, it is not possible, in particular when a bike is mounted to a load carrier, to open the luggage compartment lid. Furthermore, there is always a need to store such load carriers in a space-saving manner when the load carrier is not in use.

Accordingly, it is an object of the present invention to provide an alternative load carrier, which in particular allows an easy access to the luggage compartment when mounted to a vehicle, and which preferably can be stored in a space-saving way.

This object is solved by a load carrier, in particular a bike carrier, with a basic structure having a base frame and a coupling device for attachment to a vehicle, wherein the coupling device is arranged at a front end of the base frame, and a load receiving structure, which is held slidingly at the basic structure such that it can be moved translationally between a retracted front position and an extended rear position, wherein the load receiving structure comprises a central base element, at least one, in particular exactly one first support part and at least one, in particular exactly one second support part, wherein the first support part(s) and a second support part(s) are held pivotably in particular at opposite lateral sides at the central base element such that they can be pivoted between a load bearing position, in which they extend at least substantially horizontally, and a transport position, in which they extend at least substantially vertically.

The invention is based on the consideration to provide on one hand a sliding mechanism, which allows the load receiving structure to be moved out of the movement range of a luggage compartment lid. In other words, when the load carrier is in use and the vehicle should be moved, the load receiving structure can be in the retracted front position. When the luggage compartment lid should be opened, the load receiving structure (together with a load, in particular a bike mounted thereto) can be moved backwards into the extended rear position out of the movement range of the luggage compartment lid. In addition, a folding mechanism is provided which allows to move the support parts between a load bearing position and a transport position. In the load bearing position, they are arranged such that they can receive or carry a load to be transported, in particular one or a plurality of bikes. In their transport position, they extend at least substantially vertically so that the load carrier can be transported in a space-saving manner.

Preferably, each support part comprises at least one wheelholder for receiving a wheel of a bike. In other words, such a wheelholder may be used to receive and/or fix a wheel of a bike to be transported. Accordingly, when the first support part and the second support part are in their load bearing positon, they may extend to opposite lateral sides, so that a wheelholder of the first support part and a corresponding wheelholder of the second support part are arranged on opposite lateral sides of the central base element. At their inner end regions, the wheelholders may be held pivotably at the central base element. In concrete terms, assigned to each wheelholder, a pivot pin may be provided at the central base element and the wheelholder may comprise a corresponding pivot hole through which the pivot pin extends. Each wheelholder may comprise fixing means, in particular in the form of fixing belts in order to fix a bike at the load carrier. In concrete terms, each wheelholder may comprise a profile rail, and the fixing means may comprise a fixing base body, which can be moved along the longitudinal axis of the wheelholder profile rail and can be fixed at a desired positon. Fixing belts may be attached to the fixing base body wherein the fixing belts can be laid around the wheel of a bike in order to fix a wheel of the bike at the load carrier. Each wheelholder may comprise a receiving deepening in order to receive a wheel of a bike. Such a receiving deepening may be formed by a deepening arranged in the outer contour of a wheelholder profile rail.

According to a preferred embodiment, each support part comprises exactly two wheelholders. In particular, the wheelholders of the respective support part are arranged parallel and spaced apart from each other. Preferably, the wheeholders assigned to the first support part are arranged symmetrically with regard to a central plane extending vertically and in the longitudinal direction of the load carrier with respect to the wheelholders of the other support part. The wheelholders of the respective support part may be, preferably at their outwardly facing end regions, connected to each other.

Each support part may comprise at least one, in particular exactly two profile rails for receiving a load. These profile rails may comprise a central deepening with a T-shaped groove in order to fix a load, in particular a luggage box, thereon. In other words, the load carrier may be used alternatively or additionally to transport a luggage box. In such a luggage box, for example suitcases can be transported, which exceed the capacity of the luggage compartment of a vehicle.

Preferably, the support parts are each provided with at least one carrying handle in their outwardly facing end regions. The carrying handles may be designed and arranged in particular in such a way that they can be gripped together with one hand in the transport position of the support parts.

In order to fix the frame of a bike to the load carrier, the rear load carrier may comprise a holding yoke, which is fastened to the central base element and projects upwards from the latter.

The rear load carrier may comprise a license plate holder, which is arranged on the rear side of the central base element and is designed to receive a license plate. In particular, a pivot mechanism may be provided which is adapted to pivotably move the license plate holder about a license plate holder pivot axis between a substantially horizontal position and a substantial vertical position. Preferably, a locking device is provided for releasably locking the license plate holder in its substantial horizontal position. The locking device may be configured such that the locking of the license plate holder is automatically released, when the first support part and/or the second support part is/are moved from its load bearing position into its transport position. Such a locking device is described, for example, in detail in EP 3 656 610 B1.

In a further elaboration of the invention, a rear load carrier may comprise rear light units which are fastened to the rear side of each support part, wherein the rear light units are arranged projecting from the support parts and the license plate holder in such a way that the license plate holder, when it is in its substantially vertical position and the support parts are in the transport position, the license plate holder is received in a receiving space between the rear lights and the support parts. The rear light units may be connected to a power supply cable which may be held at and/or fixed to the load receiving structure and/or the basic structure. The power cable(s) may end at a plug connector for attachment to a vehicle.

The central base element may comprise to supporting sections arranged on opposite lateral sides, wherein each supporting section holds one support parts. The central base element may further comprise at least one bridging element, in particular exactly two bridging elements, which connect(s) the two supporting section and overbridge(s) the space between them. In other words, the central base element may be composed of several parts, wherein two supporting sections arranged in opposite lateral sides preferably extend along the longitudinal direction of the load carrier. The supporting sections may be formed by an aluminium profile element, which comprises two receiving recesses for receiving the inner end section of the corresponding support parts. In concrete terms, one support part may be assigned to each supporting section. The receiving deepening may comprise a lower surface, against which the support part abuts, when the support part is in its load bearing position. In this way, the load bearing position of the support parts is defined.

The two supporting sections may be arranged symmetrically with respect to a central plane extending in the longitudinal and vertical direction.

Two bridging elements may be provided which connects the two supporting sections. The two bridging elements may be spaced apart from each other in the longitudinal direction. In particular, the bridging elements may be arranged in the longitudinal region of the pivot pins for bearing the support parts. The bridging elements may be formed by extruded aluminium profiles, which are on their opposite lateral sides in engagement with the supporting sections.

At a front end of the supporting section, vertically extending receiving holes may be provided in order to receive the lower end sections of a holding yoke. In other words, the holding yoke may extend into these receiving holes from the top.

The load carrier may comprise at least one intermediate sliding element, wherein each intermediate sliding element is arranged between the basic structure and the load receiving structure in such a way that the intermediate sliding element is slidingly movable relative to the basic structure and the load receiving structure is slidingly movable relative to the intermediate sliding element, so that the load receiving structure is telescopically displaceable relative to the basic structure. By means of such an intermediate sliding element, the distance of the load receiving structure relative to the basic structure between its retracted front position and its extended rear position can be at least 60 cm. Such a displacement distance allows to bring the load receiving structure and a load arranged there on out of the movement range of a luggage compartment lid for rear doors of a vehicle. Preferably, the displacements distance of the load receiving structure relative to the basic structure between is retracted front position and its extended rear position is at least 1.1 times the longitudinal extension of the load carrier, when the load receiving structure is in its retracted front position. Accordingly, it may be provided that the displacement path of the load receiving structure relative to the basic structure is in total longer than the entire extension of the load carrier in its longitudinal direction. Such a long displacement path can be presently achieved by means of an intermediate sliding element.

The base frame may have a C-shaped structure open towards the rear side, wherein a central C-section may extend transversally to a longitudinal direction of the load carrier, two C-legs may extend parallel to each other towards the rear side of the load carrier. The load carrier may comprise exactly two intermediate sliding elements, wherein the intermediate sliding elements preferably extend parallel to each other. In concrete terms, one intermediate sliding element may be assigned to each C-leg of the base frame.

According to a preferred embodiment of the invention, each intermediate sliding element may comprise an engagement contour on its side facing towards the basic structure and the basic structure may have assigned to each intermediate sliding element a corresponding in particular complementary counter contour, wherein the engagement contour engages behind the counter contours such that the intermediate sliding element is slidingly movable relative to the basic structure in a longitudinal direction, but fixed transversally to the longitudinal direction in a form-fit manner. In other words, a form-fit connection between the intermediate sliding element and the basic structure is realized in order to ensure that the intermediate sliding element is held slidingly on the basic structure such that only a translational movement in one direction of the intermediate sliding element relative to the basic structure is possible.

In concrete terms, the engagement contour and the counter contour may each comprise two L-shaped protrusions, which are arranged such that the L-shaped protrusions of the engagement contour engage behind the L-shaped protrusions of the counter contour. Preferably, the L-shaped protrusions of the engagement contour and/or of the counter contour are arranged mirror-symmetrically in particular with respect to a longitudinal center plane of the intermediate sliding element. Each L-shaped protrusion may comprise a first L-leg, which faces towards the other element, and a second L-leg, which extends transversely, in particular perpendicularly to the first L-leg. The L-shaped protrusions of the engagement contour and/or the counter contour may be formed that the first L-legs of a contour extend parallel to each other, whereas the second-legs face towards each other or face away from each other. For example, the second L-legs of the engagement contour may face away from each other and the second L-legs of the counter contour may face towards each other so that the L-shaped protrusions engage behind each other so that a form-fit connection between the basic structure and the intermediate sliding element is realized. The counter contour may be formed by or arranged on a basic profile rail of the basic structure.

The load receiving structure may comprise assigned to each intermediate sliding element an engagement profile on its side facing towards the intermediate sliding element and the intermediate sliding element may have a corresponding complementary counter profile, wherein the engagement profile engages behind the counter profile such that the load receiving structure is slidingly moveable relative to the intermediate sliding element in a longitudinal direction, but fixed transversally to the longitudinal direction in a form-fit manner.

In concrete terms, the engagement profile and the counter profile may each comprise two L-shaped projections, which are arranged such that the L-shaped projections of the engagement profile engage behind the L-shaped projections of the counter profile. Furthermore, the L-shaped projections of the engagement profile and/or of the counter profile may be arranged in a mirror symmetrical manner with respect to a longitudinal center plane of the intermediate sliding element. The engagement profile and the counter profile may be formed similarly or even identically to the engagement contour and the counter contour. Accordingly, the engagement profile may have the same cross-section as the engagement contour and/or the counter profile may have the same cross-section as the counter contour.

According to a preferred embodiment of the invention, the engagement contour and/or counter contour and/or the engagement profile and/or the counter profile may be provided with a coating, which reduces the friction and therefore the force that is necessary to move the load receiving structure relative to the basic structure.

In order to ensure a robust and safe movement of the load receiving structure relative to the basic structure, the load carrier may comprise two intermediate sliding elements spaced apart from each other and extending parallel to each other. In particular, the intermediate sliding elements may be spaced apart from each other laterally. Such a double telescopical connection between the basic structure and the load receiving structure is resistant against torsion momentums so that a stable design can be achieved. Accordingly, the load receiving structure may comprise two engagement profiles and the basic structure can comprise two counter contours being arranged parallel to each other.

The counter contour of the basic structure may be formed by an attachment profile, which is plugged onto the basic frame, in particular onto a leg of the basic frame. Accordingly, the counter contour may be formed by a separate piece, which is plugged onto the basic frame. This attachment profile may be an extruded aluminium profile or may be made of plastic.

The engagement profile may be arranged on a bottom side of the central base element, in particular on a bottom side of the two supporting sections. In concrete terms, the engagement profile may be formed by an extruded aluminium profile arranged on a bottom side of the central base element or in a single-piece design with the supporting sections. The intermediate sliding element may be formed by an extruded hollow profile, in particular an aluminum profile. In this way, an easy manufacturing is possible. The load receiving structure may be arranged above the basic structure so that the load receiving structure is arranged above the intermediate sliding element(s) and the intermediate sliding element(s) is arranged above the basic structure.

Stop means may be provided in order to limit the movement of the load receiving structure relative to the basic structure. In other words, such stop means may define the retracted front position and/or the extended rear position. By means of such stop means, an unintended loosening of the load receiving structure from the basic structure may be avoided. In concrete terms, stop means may comprise stop-blocks, which can be mounted to the load receiving structure, in particular to a bottom side of the supporting sections, and/or to the intermediate sliding element and/or to the basic structure, in particular on an upper side of the basic structure.

In order to avoid an unintentional movement of the load receiving structure out of its retracted front position, at least one locking mechanism may be provided by means of which the load receiving structure may be locked relative to the basic structure. Preferably, exactly one locking mechanism is provided.

Each locking mechanism may comprise at least one locking bolt that is held at the basic structure or at the load receiving structure, in particular at the load receiving structure, preferably at one bridging element, more preferably at the rear bridging element, such that it can be moved between a locking position and a release position. The locking bolt can be brought in engagement with a corresponding locking recess formed in the other of the load receiving structure or the basic structure, in particular in the basic structure. Preferably, the basic structure may comprise a bridge element extending between two C-legs of the base frame, wherein the bridge element is preferably arranged at a rear end of the base frame. It may be provided that the locking bolt can be brought in engagement with the locking recess or locking hole when the load receiving structure is in its retracted front position.

Preferably, the locking bolt is preloaded in the direction of the locking position. In this way, the locking bolt can be brought automatically in engagement with the locking recess. The locking recess may be formed as a hole, which is preferably formed in the bridge element.

A holding mechanism may be provided, which is designed such that it holds the locking bolt in its release position, when the locking bolt is being transferred from the locking position into the release position so that the load receiving structure can be freely displaced with respect to the basic structure. In particular, the holding mechanism may be arranged such that it automatically releases the locking bolt either shortly before or upon reaching the retracted front position, when the load receiving structure is being moved into the retracted front position, so that the locking bolt is moved into the locking position and locking takes place. In other words, it may be provided that the locking bolt is automatically brought into its locking position, when the load receiving structure reached its retracted front position.

The holding mechanism may comprise one holding element, which has a holding section that automatically engages with the projection provided at the locking bolt, when the locking bolt is transferred from the locking position into the release position. In concrete terms, the projection may be formed by a retaining ring that encloses the locking bolt. The holding element may be held at the one structure, in particular at the basic structure or at the load receiving structure, so as to be movable between a holding position and a free-running position, in particular so as to be pivotable about a pivot axis. The holding element may be preloaded in the direction of the holding position. In concrete terms, a spring element assigned to the holding element can be provided for preloading the holding element in the direction of the holding position.

The holding element can have a step- or hock-shaped holding section. When the locking bolt is in the release position and the holding element is in the holding position, particularly preferably a bottom side of the projection provided at the locking bolt, the locking bolt may rest on a top side of the step- or hock-shaped holding section. The top side of the step- or hock-shaped holding section may be aligned so it has to be at least substantially orthogonal to the locking axis along which the locking bolt is movable between the locking position and the release position.

In a further preferred embodiment, the holding element has a tapered section, which preferably tapers into the direction of the other of the load receiving structure and the basic structure. The arrangement is then preferably realized in such a manner that the projection provided at the locking bolt is in engagement with and moved along the tapered section, when the locking bolt is transferred from the blocked position into the release position and the holding element is pressed from the holding position into the free-running position. The tapered section may for example be at least substantially V-shaped.

The holding element may have an arcuate section or a section with an arcuate outside contour with which the projection provided at the locking bolt engages or is engaged if it is moved from the locking position into the release position. The arcuate section is preferably designed in such a manner and the arrangement is realized in such a manner that the projection provided at the locking bolt is moved along the arcuate section or outer contour, and the holding element is in a particular appropriate manner pressed from the holding position into the free running position when the locking bolt is transferred from the locking position into the release position. The arcuate outside contour can form one side of the tapered section.

With regard to the embodiment of the invention, reference is also made to the sub-claims into the following description of an exemplary embodiment with reference to the attached drawings. In the drawing shoes:
- Figure 1: a rear load carrier according to the invention in a perspective view, wherein the load receiving structure is in its retracted front position and the support parts are in their load bearing position;
- Figure 2: the rear load carrier of figure 1 in a perspective view, wherein the load receiving structure is in the retracted front position and the support parts are in their transport position;
- Figure 3: the load carrier of figure 1 in a perspective view, wherein the load receiving structure is in its extended rear position and the support parts are in their load bearing position;
- Figure 4: the rear load carrier shown in figure 3 in another perspective view;
- Figure 5: the central base element of the rear load carrier in figure 1 in perspective view;
- Figure 6: the central base element shown in figure 5 in a front view;

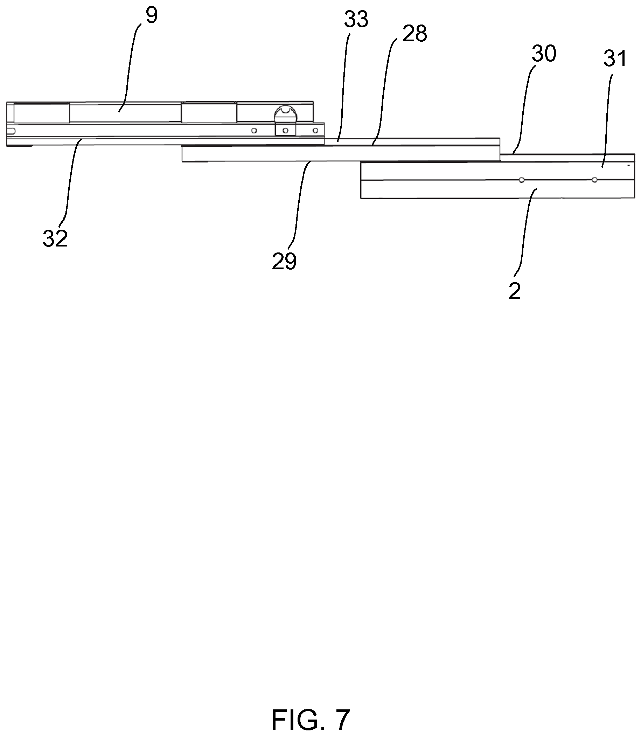

- Figure 7: the sliding mechanism of the rear load carrier of figure 1 in a side view;

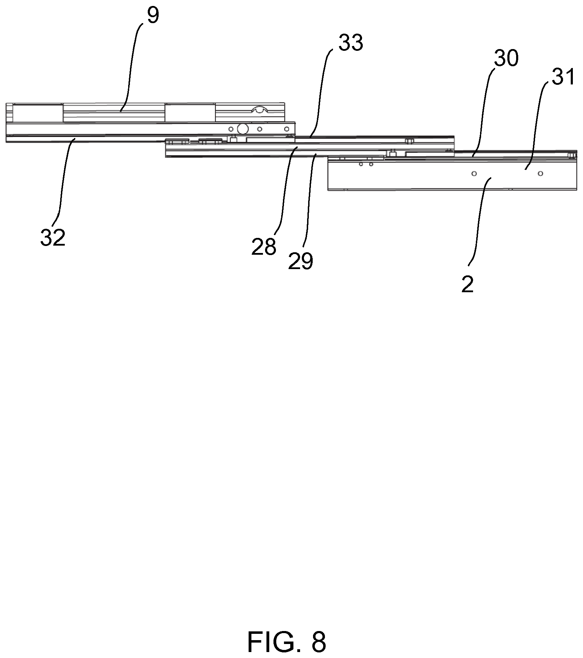

- Figure 8: the sliding mechanism in another side view;
- Figure 9: the locking mechanism of the rear load carrier of figure 1 in a cross-sectional view;
- Figure 10: a rear section of a vehicle with the load carrier of figure 1, wherein the luggage compartment lid of the vehicle is closed;
- Figure 11: the arrangement shown in figure 10, wherein the load receiving structure is in its extended rear position and the luggage compartment lid of the vehicle is opened; and
- Figure 12: the arrangement shown in figure 10 in a side view.

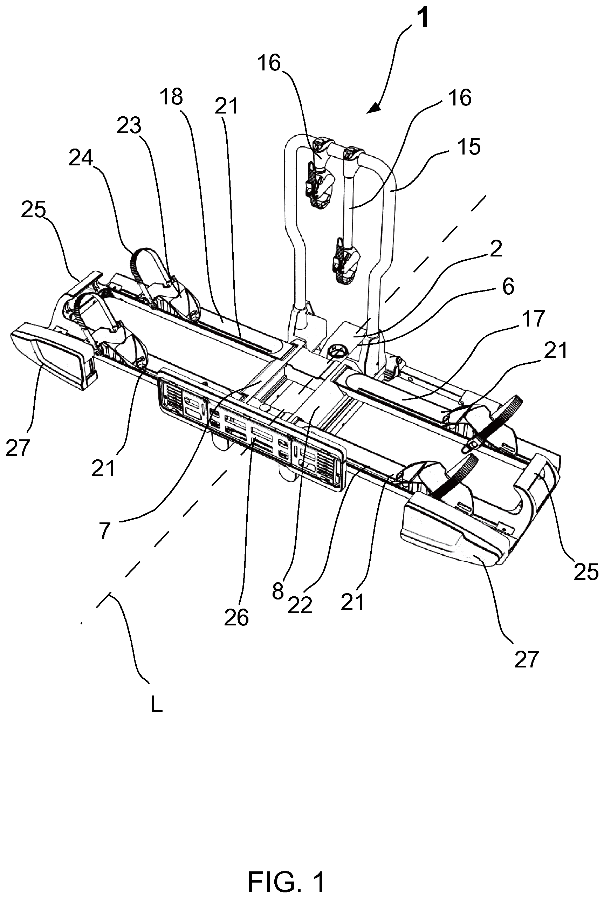

Figure 1 shows a rear load carrier 1 according to the invention, which is formed as a bike carrier and can transport two bikes.

The rear load carrier 1 comprises a basic structure 2. The basic structure 2 comprises a base frame 3, which has a C-shaped structure open towards the rear side. The base frame 3 comprises a central C-section 4 and two C-legs 5a, 5b extending parallel to each other towards the rear side of the load carrier. In concrete terms, the base frame 3 is formed by a plurality of tube sections, which are welded together.

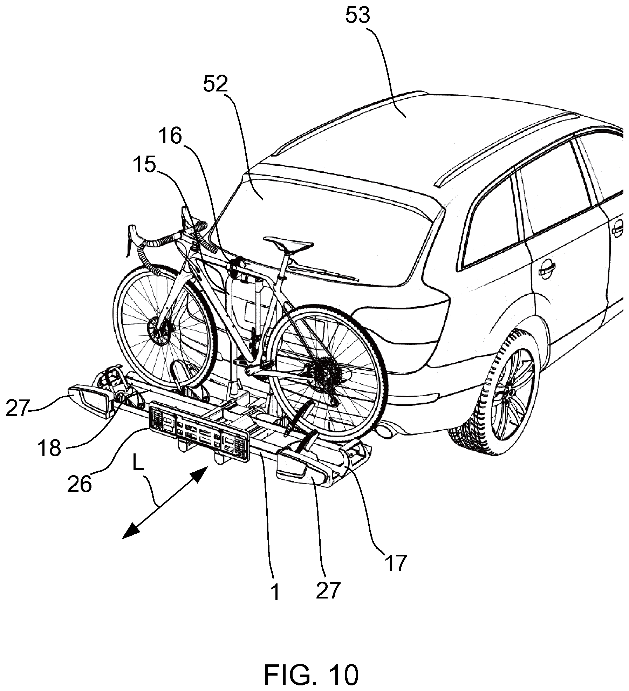

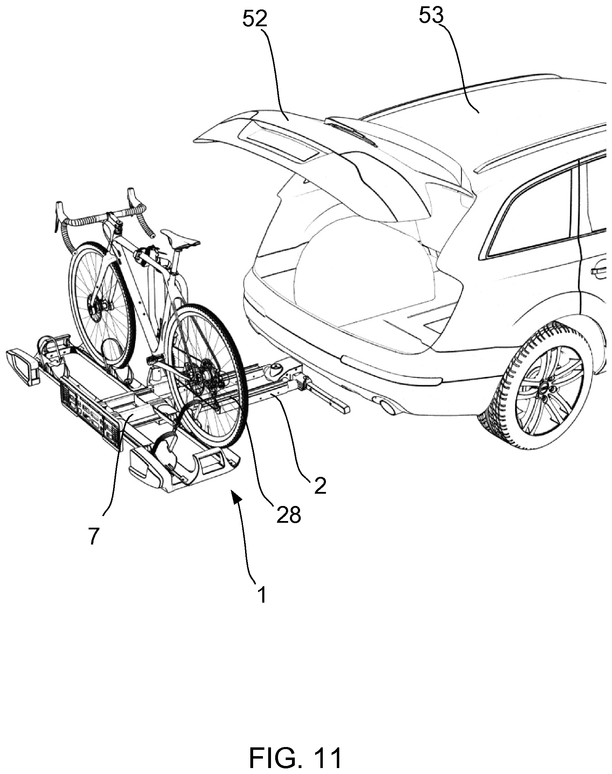

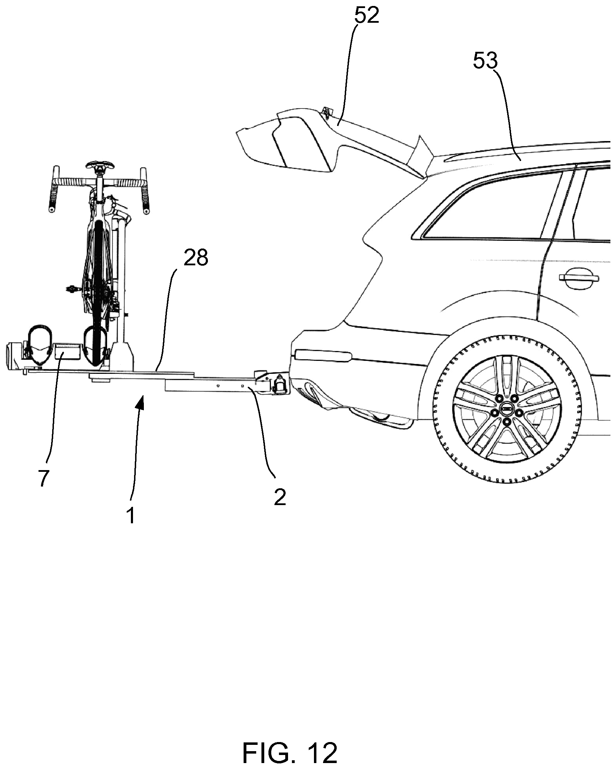

At its front end, the basic structure 2 comprises a coupling device 6 for attachment to a vehicle side trailer coupling. Such a mounted rear load carrier 1 is shown for example in figures 10 to 12.

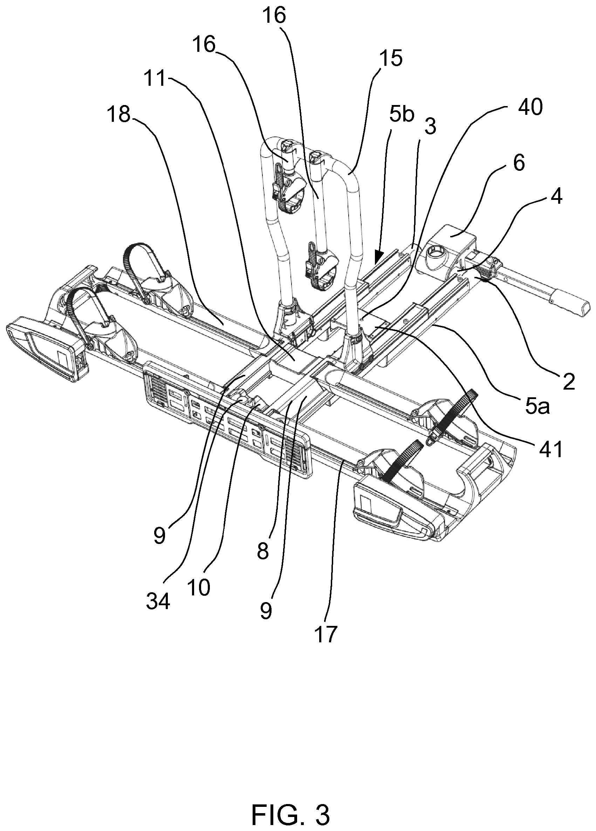

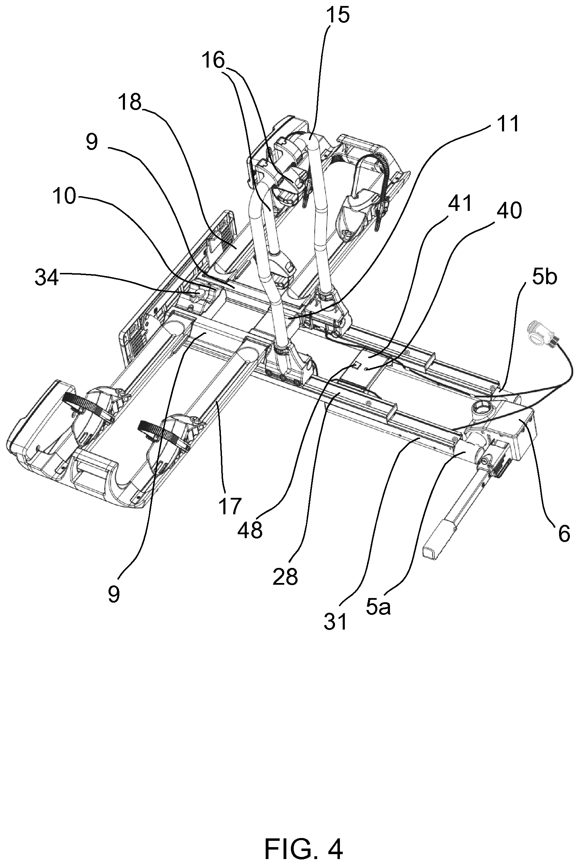

The load carrier further comprises a load receiving structure 7 for carrying a load, presently two bicycles. This load receiving structure 7 is held slidingly at the basic structure 2 such that it can be moved translationally between a retracted front position, which is for example shown in figure 1, and an extended rear position, which is for example shown in figures 3 and 4.

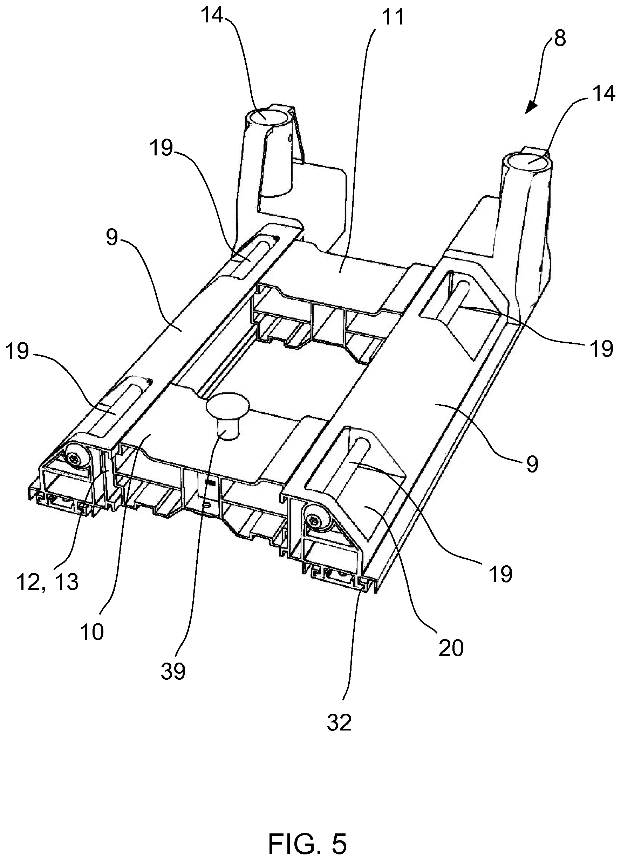

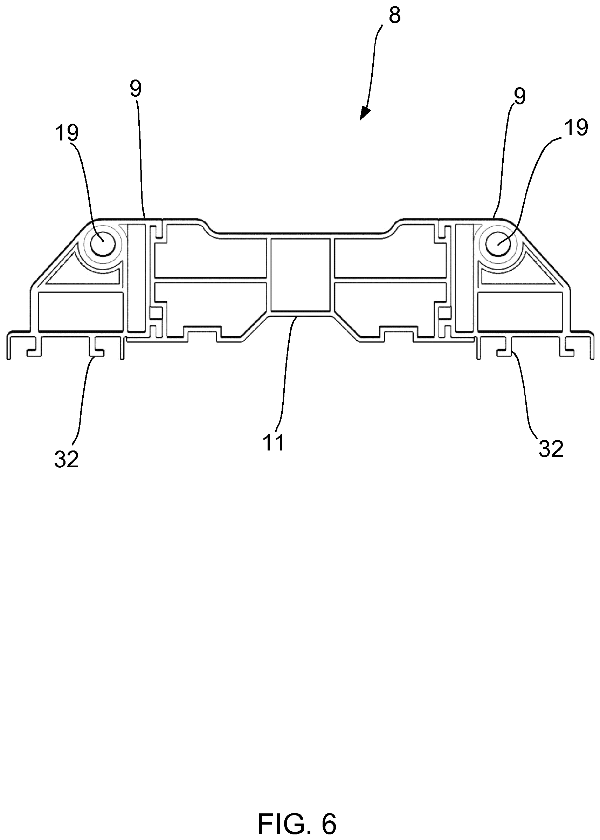

The load receiving structure 7 comprises a central base element 8. This central base element 8 is shown in detail in figures 5 and 6 and comprises two supporing sections 9 arranged on opposite lateral sides. The supporting sections 9 are, according to a preferred embodiment, formed symmetrically to each other with respect to a central plane extending in a longitudinal and vertical direction.

The central base element 8 further comprises a rear bridging element 10 and a front bridging element 11, which connect the two supporting sections 9 and overbridge the space between them. The bridging elements 10, 11 are formed as aluminium profiles and have, at their lateral sides, engaging protrusions 12, which engage into a corresponding engaging recess 13 formed at the supporting sections 9.

At their front ends, the supporting sections 9 have vertically extending receiving holes 14, which receive the lower end sections of a holding yoke 15. The holding yoke 15, which is shown for example in figures 1 to 4, serves to fix the frames of a bike mounted on the load carrier 1, by means of so called strap frame holders 16.

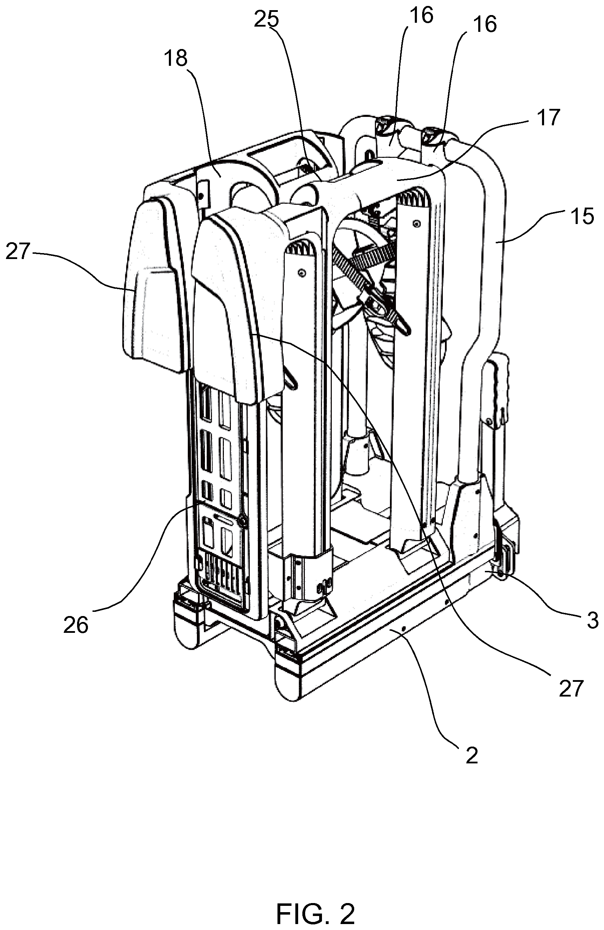

The load receiving structure 7 further comprises a first support part 17 and a second support part 18, wherein the support parts 17, 18 are held pivotably at opposite lateral sides at the central base element 8 such that they can be pivoted between a load bearing position and a transport position. In the load bearing position, the first support part 17 and the second support part 18 extend substantially horizontally, which is shown for example in figure 1, 3 and 4. In the transport position, the support parts 17, 18 extend substantially vertically, which is shown in figure 2. In concrete terms, a plurality of pivot pins 19 is provided at the central base element 8, specifically in corresponding deepenings 20 formed in the supporting sections 9. These pivot pins 19 extend through corresponding pivot holes formed in the support parts 17, 18.

Each support part 17, 18 comprises exactly two wheelholders 21. The wheelholders of each support part 17, 18 extend parallel to each other and are spaced apart from each other. Each wheelholder 21 serves to receive a wheel of a bike, which is for example shown in figures 10 to 12, and comprises a profile rail 22 and fixing means in order to fix a bike to the load carrier 1. These fixing means comprise a fixing base body 23 and a fixing belt 24, which can be laid around a wheel of a bike in order to fix a wheel of a bike at the load carrier. The fixing base body 23 can be moved along the longitudinal direction of the profile rail 22 in order to adapt the fixing means to the size of a bike.

In their outwardly facing end regions, the wheelholders 21 of each support part 17, 18 are connected to each other. In concrete terms, this connection is realized by means of a carrying handle 25, which is designed and arranged in such a way that the carrying handle 25 of both support parts 17, 18 can be gripped together with one hand in the transport position of the support parts 17, 18.

The rear load carrier 1 further comprises a license plate holder 26, which is arranged on the rear side of the central base element 8 and is designed to receive a license plate. A pivot mechanism is provided which is adapted to pivotably move the license plate holder 26 between a substantially horizontal position, which is shown for example in figures 1, 3 and 4, and a substantially vertical position, which is shown in figure 2. Preferably, the license plate holder 26 is moved automatically from its horizontal position to its substantially vertical position, when the support parts 17, 18 are moved from their load bearing position into their transport position, and vice versa.

Rear lights 27 are fastened to the rear side of each support part 17, 18. They are arranged projecting from the support parts 17, 18 and the license plate holder 26 in such a way that the license plate holder 26, when it is in its substantially vertical position and the support parts 17, 18 are in the transport position, the license plate holder is received in a receiving space between the rear lights 27 and the support parts 17, 18.

In order to move the load receiving structure 7 relative to the basic structure 2, the rear load carrier 2 comprises two intermediate sliding elements 28. One intermediate sliding element 28 is assigned to each C-leg 5a, 5b of the base frame 3.

Each intermediate sliding element 28 is arranged between the basic structure 2 and the load receiving structure 7 in such a way that the intermediate sliding element 28 is slidingly movable relative to the basic structure 2 and the load receiving structure 7 is sliding movable relative to the intermediate sliding element 28. Accordingly, the load receiving structure 7 is telescopically displaceable relative to the basic structure 2. Preferably, the intermediate sliding element 28 is arranged above the basic structure 2 and below the load receiving structure 7.

On its side facing towards the basic structure 2, each intermediate sliding element comprises an engagement contour 29, and the basic structure 2 has, assigned to each intermediate sliding element 28, a corresponding complementary counter contour 30, wherein the engagement contour 29 engages behind the counter contour 30 such that the intermediate sliding element 28 is slidingly moveable relative to the basic structure 2 in a longitudinal direction, but fixed transversally to the longitudinal direction in a form fit manner. In concrete terms, the counter contour is formed by a basic profile rail 31 of the basic structure 2, which is plugged onto the respective C-leg 5a, 5b of the base frame 3.

The load receiving structure 7 comprises assigned to each intermediate sliding element 28 on its side facing towards the intermediate sliding element 28 an engagement profile 32. The intermediate sliding element 28 has a corresponding complementary counter profile 33. The engagement profile 32 is arranged on a bottom side of the two supporting sections 9 of the central base element 8. The engagement profile 23 engages behind the counter profile 33. Accordingly, the load receiving structure 7 is slidingly movable relative to the intermediate sliding element 28 in a longitudinal direction L, but fixed transversally to the longitudinal direction L in a form-fit manner.

The load carrier 1 comprises exactly one locking mechanism 24, by means of which the load receiving structure 7 can be locked relative to the basic structure 2 at least in the retracted front position.

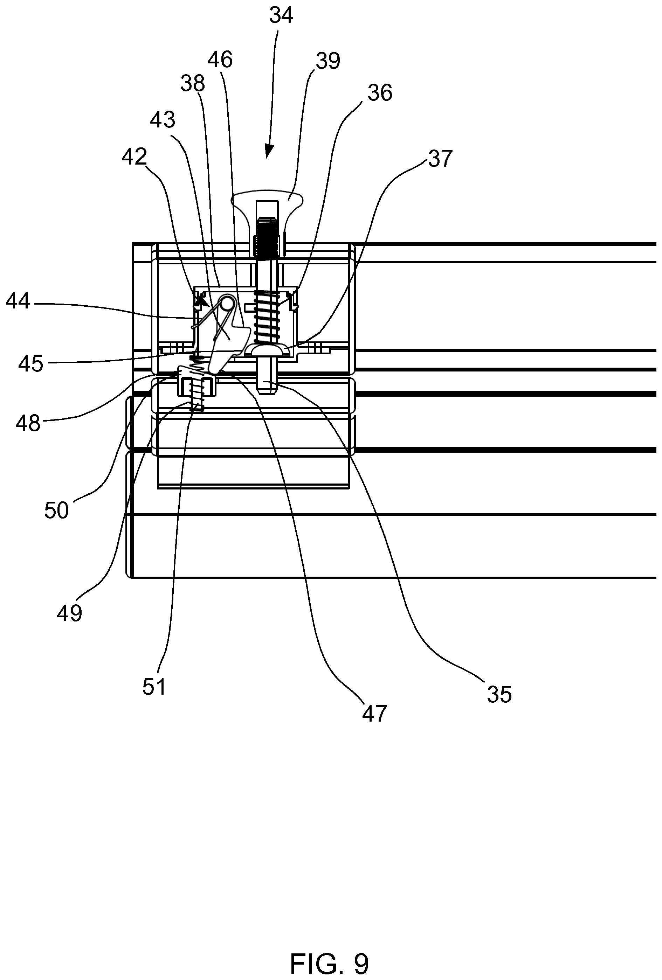

The detailed embodiment of the locking mechanism is shown in figure 9. The locking mechanism 34 comprises a locking bolt 35 that is held at the rear bridging element 10 so as to be movable in a vertical direction between a locking position and a release position. The locking bolt 35 is pre-loaded in the direction of the locking position by means of a coil spring 36. At the locking bolt 35, a ring 37 enclosing the same is fixed, which in the locking position rests at the top side of an insert element 38 so that the locking bolt 35 cannot be moved further downwards. A movement upwards is also restricted by the ring 37 and the coil spring 36.

At the free end of the locking bolt 35 that points upwards in figure 9, a handle 39 is fixed which facilitates a convenient release of the locking by a user.

In the locking position, the locking bolt 35 meshes into a locking recess 40 formed as a hole that is provided at a bridge element 41 extending between the two C-legs 5a, 5b arranged at a rear end of the base frame 3. A holding mechanism 42 is provided, which is designed such that is holds the locking bolt 35 in its release position, when the locking bolt 35 is being transferred from the locking position into the release position. In this way, the load receiving structure 7 can be freely displaced with respect to the basic structure 2. The holding mechanism is arranged such that it automatically releases the locking bolt 25 either shortly before or upon reaching the retracted front position when the load receiving structure 7 is being moved into the retracted front position so that the locking bolt 35 is moved into the locking position and locking takes place.

The holding mechanism comprises a holding element 43 that is held at the insert element 38 in a movable manner. In concrete terms, it is held at the insert element 38 so as to be pivotable about a pivot axis which extends perpendicularly to the drawing plane between a holding position and a free-running position, and is pre-loaded in the direction of the holding position by means of a torsion spring 44.

The holding element 43 has a tapered section 45, which tapers into the direction of the basic structure 2 and on one side has an arcuate outer contour, a step- or hook-shaped holding section 46 as well as an end section 47 that projects downwards from the insert element 38. In the lower wall, the insert element 38 has an opening through which the end section 47 of the holding element 43 can project in the downwards direction.

The tapered section 45 of the holding element 41 is designed in such a manner and the arrangement is realized such that the ring 37 attached to the locking bolt 35 is engaged with the tapered section 45 and is moved along the arcuate outer contour of the section 45 when the locking bolt 35 is moved by a user from the locking position into the release position, and as a result of this, the holding element 43 is pressed and pivoted from the holding position in the direction of the free-running position.

The holding mechanism further comprises a releasing element 48 that is held at the basic frame 2, in concrete terms at the bridge element 41, so as to be movable between a retracted position and a projecting position. In figure 9, the releasing element 48 is shown in the retracted position. The releasing element 48 is pre-loaded in the direction of the projecting position by means of a coil spring 49. It has a ramp-shaped end area 50 that rises in a ramp shaped manner in the direction of the extended end position and engages with the end section 47 of the holding element 43 when the load receiving structure 7 is brought from the retracted front into the extended rear position or vice versa, wherein the end region 47 of the holding element 43 engages with a ramp-shaped end area 50 of the releasing element 48 shortly before reaching the retracted front position. In the projecting position, the ramp-shaped end area 50 projects in the direction of the load receiving structure 7 to beyond the edge of the basic structure 2.

On the bottom side, the releasing element 48 has a bore hole, which cannot be seen in figures and is plugged onto a holding pin 51 that is fixated at the basic structure 2. The coil spring 49 extends about the holding pin 51 for preloading the releasing element 48 in the projecting position.

The arrangement is realized in such a manner that, when the load receiving structure 7 is brought into the extended rear position, the engaging end section 47 of the holding element 43 is moved in the rising direction over the ramp-shaped end area 50 of the releasing element 48, and the holding element 43 presses the realizing element 48 in the retracted position. But if by contrast the load receiving structure 7 is brought back to the retracted front position, the engaging end section 47 of the holding element 43 abuts the higher side of the ramp-shaped end area 50 and in this way is moved from the holding position into the free-running position, whereby the locking bolt 35 is automatically released and the load receiving structure 7 is automatically locked relative to the basic structure 2.

The rear load carrier 1 allows on one hand to move a load to be transported out of the movement range of the luggage compartment lid 52, when the load receiving structure 7 is moved from its retracted front position into its extended rear position, as it is shown for example in figures 10, 11 and 12. In this way, access to the luggage compartment of a vehicle 53 is possible without the necessity to dismount the load to be transported from the rear load carrier 1. In addition, when not in use, the support parts 17, 18 can be moved towards their substantially vertical position so that the load carrier can be transported in a very space-saving manner, as it is shown for example in figure 2.

### Reference Character List

- 1: rear load carrier
- 2: basic structure
- 3: base frame
- 4: central C-section
- 5a, 5b: C-leg
- 6: coupling device
- 7: load receiving structure
- 8: central base element
- 9: supporting section
- 10: rear bridging element
- 11: front bridging element
- 12: engaging protrusion
- 13: engaging recess
- 14: receiving hole
- 15: holding yoke
- 16: strap frame holder
- 17: first support part
- 18: second support part
- 19: pivot pin
- 20: deepening
- 21: wheelholder
- 22: profile rail
- 23: fixing base body
- 24: fixing belt
- 25: carrying handle
- 26: license plate holder
- 27: rear light
- 28: intermediate sliding element
- 29: engagement contour
- 30: counter contour
- 31: basic profile rail
- 32: engagement profile
- 33: counter profile
- 34: locking mechanism
- 35: locking bolt
- 36: coil spring
- 37: ring
- 38: insert element
- 39: handle
- 40: locking recess
- 41: bridge element
- 42: holding mechanism
- 43: holding element
- 44: torsion spring
- 45: tapered section
- 46: holding section
- 47: end section
- 48: releasing element
- 49: coil spring
- 50: end area
- 51: holding pin
- 52: luggage compartment lid
- 53: vehicle
- L: longitudinal direction

## Claims

1. Rear load carrier (1), in particular a bike carrier, with
a basic structure (2) having a base frame (3) and a coupling device (6) for attachment to a vehicle (53), wherein the coupling device (6) is arranged at a front end of the base frame (3),
a load receiving structure (7), which is held slidingly at the basic structure (2) such that it can be moved translationally between a retracted front position and an extended rear position,
wherein the load receiving structure (7) comprises a central base element (8), at least one, in particular exactly one first support part (17) and at least one, in particular exactly one second support part (18), wherein the first support part(s) (17) and the second support part(s) (18) are held pivotably at opposite lateral sides at the central base element (8) such that they can be pivoted between a load bearing position, in which they extend at least substantially horizontally, and a transport position, in which they extend at least substantially vertically.

2. Rear load carrier (1) according to claim 1, **characterized in that** each support part comprises at least one wheelholder (21) for receiving a wheel of a bike, wherein, in particular, the wheelholders (21) are, preferably at their inner end regions, held pivotably at the central base element (8), and/or wherein, in particular, each wheelholder (21) comprises fixing means, in order to fix a wheel of a bike at the load carrier, and/or wherein, in particular, each wheelholder (21) comprises a receiving deepening (20) in order to receive a wheel of a bike.

3. Rear load carrier (1) according to claim 2, **characterized in that** each support part (17, 18) comprises exactly two wheelholders (21), wherein, in particular, the wheelholders (21) of the respective support part (17, 18) are arranged parallel and spaced apart from each other, and/or wherein, in particular, the wheelholders (21) of the respective support part (17, 18) are, preferably at their outwardly facing end regions, connected to each other.

4. Rear load carrier (1) according to any of the preceding claims, **characterized in that** the support parts (17, 18) are each provided with at least one carrying handle (25) in their outwardly facing end regions, the carrying handles (25) being designed and arranged in particular in such a way that they can be gripped together with one hand in the transport position of the support parts (17, 18), and/or **in that** the rear load carrier (1) comprises a holding yoke (15), which is fastened to the central base element (8) and projects upwards from the latter.

5. Rear load carrier (1) according to any of the preceding claims, **characterized in that** it comprises a license plate holder (26), which is arranged on the rear side of the central base element (8) and is designed to receive a license plate, wherein, in particular, a pivot mechanism is provided which is adapted to pivotably move the license plate holder (26) about a license plate holder (26) pivot axis between a substantially horizontal position and a substantially vertical positon, wherein, preferably, a locking device is provided for releasably locking the license plate holder (26) in its substantially horizontal position, wherein, particularly preferably, the locking device is configured such that the locking of the license plate holder (26) is automatically released, when the first support part (17) and/or the second support part (18) is/are moved from its load bearing position into its transport position.

6. Rear load carrier (1) according to any of the preceding claims, **characterized in that** rear lights (27) are fastened to the rear side of each support part (17, 18), which rear lights (27) are arranged projecting from the support parts (17, 18) and the license plate holder (26) in such a way that the license plate holder (26), when it is in its substantially vertical position and the support parts (17, 18) are in the transport position, the license plate holder (26) is received in a receiving space between the rear lights (27) and the support parts (17, 18).

7. Rear load carrier (1) according to any of the preceding claims, **characterized in that** the central base element (8) comprises
two supporting sections (9) arranged on opposite lateral sides, wherein each supporting section (9) holds one support part, and
at least one bridging element, in particular exactly two bridging elements, which connect(s) the two supporting sections (9) and overbridge(s) the space between them,
wherein, in particular, the central base element (8) comprises exactly two bridging elements (11, 12), namely a front bridging element (11) and a rear bridging element (10), which are spaced apart from each other.

8. Load carrier according to any of the preceding claims, **characterized in that** it comprises at least one intermediate sliding element, wherein each intermediate sliding element (28) is arranged between the basic structure (2) and the load receiving structure (7) in such a way that the intermediate sliding element (28) is slidingly moveable relative to the basic structure (2) and the load receiving structure (7) is slidingly movable relative to the intermediate sliding element (28) so that the load receiving structure (7) is telescopically displaceable relative to the basic structure (2).

9. Load carrier according to claim 8, **characterized in that** the base frame (3) has a C-shaped structure open towards the rear side, wherein a central C-section (4) extends transversally to a longitudinal direction (L) of the load carrier and two C-legs (5a, 5b) extend parallel to each other towards the rear side of the load carrier, and/or **in that** the load carrier comprises exactly two intermediate sliding elements (28), wherein, preferably, the intermediate sliding elements (28) extend parallel to each other.

10. Load carrier according claim 8 or 9, **characterized in that** each intermediate sliding element (28) comprises an engagement contour (29) on its side facing towards the basic structure (2) and the basic structure (2) has assigned to each intermediate sliding element (28) a corresponding complementary counter contour (30), wherein the engagement contour (29) engages behind the counter contour (30) such that the intermediate sliding element (28 ) is slidingly movable relative to the basic structure (2) in a longitudinal direction (L), but fixed transversally to the longitudinal direction (L) in a form fit manner.

11. Load carrier according to any of claims 8 to 10, **characterized in that** the load receiving structure (7) comprises assigned to each intermediate sliding element (28) an engagement profile (32) on its side facing towards the intermediate sliding element (28) and the intermediate sliding element (28) has a corresponding complementary counter profile (33), wherein the engagement profile (32) engages behind the counter profile (33) such that the load receiving structure (7) is slidingly movable relative to the intermediate sliding element (28) in a longitudinal direction (L), but fixed transversally to the longitudinal direction (L) in a form fit manner.

12. Load carrier according to any of claims 8 to 11, **characterized in that** it comprises at least one locking mechanism (34), in particular exactly one locking mechanism (34), by means of which the load receiving structure (7) can be locked relative to the basic structure (2) at least in the retracted front position.

13. Load carrier according to claim 12, **characterized in that** end locking mechanism (34) comprises at least one locking bolt (35) that is held at the basic structure (2) or at the load receiving structure (7), in particular at the load receiving structure (7), preferably at one bridging element more, preferably at the rear bridging element (10), such that it can be moved between a locking position and a release position, wherein the locking bolt (35) can be brought in engagement with a corresponding locking recess (40) formed in the other of the load receiving structure (7) or the basic structure (2), in particular in the basic structure (2), preferably at a bridge element (41) extending between two C-legs (5a, 5b) of the base frame (3) and in particular arranged at a rear end of the base frame (3), when the load receiving structure (7) is in its retracted front position.
